# EUROPÄISCHE PATENTSCHRIFT

(11) **EP 4 146 526 B1**
(45) Veröffentlichungstag und Bekanntmachung des Hinweises auf die Patenterteilung: **05.06.2024**
(21) Anmeldenummer: 21719603.9
(22) Anmeldetag: 15.04.2021
(51) Int. Cl.: B62D 7/02, B62D 15/02, B62D 63/02, B62D 61/10

(54) **MOBILES TRANSPORTSYSTEM**
MOBILE TRANSPORT SYSTEM
SYSTÈME MOBILE DE TRANSPORT

(30) Priorität: 05.05.2020 DE 102020002676
(43) Veröffentlichungstag der Anmeldung: 15.03.2023
(73) Patentinhaber: SEW-EURODRIVE GmbH & Co. KG, 76646 Bruchsal (DE)
(72) Erfinder: DEGEN, Dirk, 76646 Bruchsal (DE); SCHMIDT, Josef, 76676 Graben-Neudorf (DE); JUNGINGER, Alexander, 75196 Remchingen- Wilferdingen (DE); BOCKELMANN, Gero, 76646 Bruchsal (DE); TUSKAN, Andreas, 75045 Walzbachtal (DE); KÖDDERITZSCH, Jan-Patrick, 76448 Durmersheim (DE); ERB, Frank, 76137 Karlsruhe (DE)
(86) Internationale Anmeldenummer: PCT/EP2021/059822
(87) Internationale Veröffentlichungsnummer: WO 2021/223975

(56) Entgegenhaltungen:
- WO-A1-2018/136987
- DE-A1-102013 019 726
- DE-B3-102007 039 611

## Beschreibung

Die Erfindung betrifft ein mobiles Transportsystem zum Transport von Gegenständen, insbesondere in einer technischen Anlage, welches eine Antriebseinheit umfasst, welche ein um eine in eine Querrichtung verlaufende erste Antriebsachse drehbares erstes Antriebsrad und ein um eine in die Querrichtung verlaufende zweite Antriebsachse drehbares zweites Antriebsrad aufweist.

In technischen Anlagen, beispielsweise in Produktionswerken, werden mobile Transportsysteme, insbesondere autonom fahrende mobile Transportsysteme, zum Transport von Gegenständen, beispielsweise Kleinteilen oder Kisten eingesetzt. Die besagten mobilen Transportsysteme bringen unter anderem Bauteile von Logistikbereichen, wie beispielsweise einem Materiallager, zu Arbeitsplätzen, wo die Bauteile verarbeitet werden. Gattungsgemäße mobile Transportsysteme sind in der Lage, leichte Steigungen oder Gefälle sowie kleine Bodenschwellen oder ähnliche Hindernisse zu überwinden.

Aus dem Dokument DE 10 2017 201 108 A1 ist ein mobiles Transportsystem bekannt, welches als Flurförderfahrzeug ausgebildet ist und ein erstes Stützrad an einem vorderen Ende, ein zweites Stützrad an einem hinteren Ende sowie ein dazwischen angeordnetes Antriebsrad aufweist. Dabei ist das erste Stützrad an einem Fahrgestell angeordnet, während das zweite Stützrad und das Antriebsrad an einem Pendelrahmen angeordnet sind. Der Pendelrahmen ist dabei mittels einer horizontalen Pendelachse an dem Fahrgestell angelenkt.

Das Dokument DE 10 2012 025 152 A1 offenbart ein fahrerloses Transportsystem, welches an einem Tragteil angeordnete Lenkrollen und eine Antriebseinheit aufweist. Die Antriebseinheit weist ein von einem Elektromotor angetriebenes Rad auf und ist über einen Linearaktor relativ zu dem Tragteil bewegbar.

Aus dem Dokument DE 10 2013 019 726 A1 ist ein Fahrzeug bekannt, welches ein Gestell aufweist, an welchem mehrere Lenkeinheiten drehbar gelagert sind. Die Lenkeinheiten weisen jeweils ein Antriebsrad auf, dessen Radachse in einem Radachsträger drehbar gelagert ist, wobei der Radachsträger mittels einer Pendelachse drehbar gelagert ist.

Das Dokument DE 10 2014 015 317 A1 offenbart ein Fahrzeug mit einem Gestell, an dem ein Aufnahmeteil mittels einer Linearführung geführt ist. Das Fahrzeug umfasst ferner eine Antriebseinheit, die Antriebsräder aufweist, welche mittels eines Drehlagers an einer Schwinge drehbar gelagert ist.

Aus dem Dokument WO 2018/136987 A1 ist ein Fahrwerk für Transportvorrichtungen bekannt, welche einen um eine senkrechte Drehachse schwenkbaren Radträger aufweist. An dem Radträger sind zwei um eine gemeinsame Drehachse drehbare Räder angeordnet.

Aus dem Dokument DE 10 2007 039 611 B3 ist ein Wagen mit einer Laufrichtungseinstellvorrichtung zur Durchführung von Kreisfahrten bekannt. Der Wagen weist mehrere drehbare Laufrollen auf.

Der Erfindung liegt die Aufgabe zugrunde, ein mobiles Transportsystem zum Transport von Gegenständen weiterzubilden.

Die Aufgabe wird durch ein mobiles Transportsystem mit den im Anspruch 1 angegebenen Merkmalen gelöst. Vorteilhafte Ausgestaltungen und Weiterbildungen sind Gegenstand der Unteransprüche.

Ein erfindungsgemäßes mobiles Transportsystem zum Transport von Gegenständen, insbesondere in einer technischen Anlage, umfasst eine Antriebseinheit, welche ein um eine in eine Querrichtung verlaufende erste Antriebsachse drehbares erstes Antriebsrad und ein um eine in die Querrichtung verlaufende zweite Antriebsachse drehbares zweites Antriebsrad aufweist.

Dabei weist die Antriebseinheit einen Drehkranz und einen Antriebsrahmen auf, wobei der Antriebsrahmen um eine Lenkachse relativ zu dem Drehkranz schwenkbar ist. Die Antriebseinheit weist einen Markierungsträger auf, welcher ortsfest zu dem Antriebsrahmen angeordnet ist, und auf welchem optisch erfassbare Markierungen aufgebracht sind. Die Antriebseinheit weist ferner eine Kamera zur Erfassung der Markierungen auf, welche ortsfest zu dem Drehkranz angeordnet ist.

Durch die erfindungsgemäße Ausgestaltung des mobilen Transportsystems ist eine optische Erkennung einer Schwenkposition der Antriebseinheit möglich. Insbesondere ist dadurch eine Ausrichtung der Antriebsräder relativ zu einem Fahrzeugrahmen des mobilen Transportsystems sicher und präzise erfassbar. Durch die Erfassung der momentanen Schwenkposition der Antriebseinheit ist eine Regelung dieser Schwenkposition sowie der Ausrichtung der Antriebsräder relativ zu dem Fahrzeugrahmen ermöglicht.

Vorzugsweise umfasst das mobile Transportsystem auch einen Fahrzeugrahmen und mindestens ein Paar Stützräder, welche drehbar gelagert sind.

Gemäß einer bevorzugten Ausgestaltung der Erfindung enthalten die auf dem Markierungsträger aufgebrachten Markierungen Informationen, aus welchen ein Schwenkwinkel des Antriebsrahmens relativ zu dem Drehkranz um die Lenkachse ermittelbar ist. Die Markierungen enthalten beispielsweise Informationen über eine Absolutposition. Eine Initialisierung der Antriebseinheit, beispielsweise durch Anfahren einer definierten Referenzposition des Antriebsrahmens relativ zu dem Drehkranz, ist somit nicht erforderlich.

Gemäß einer vorteilhaften Ausgestaltung der Erfindung sind die auf dem Markierungsträger aufgebrachten Markierungen als Barcode, insbesondere als zweidimensionaler Barcode, insbesondere als QR-Code, ausgestaltet. Ein solcher Barcode gestattet, Informationen sicher und mit Redundanz darzustellen, wodurch ein Informationsverlust auch bei einer Fehlerkennung einzelner Details vorteilhaft vermeidbar ist. Ein entsprechender Barcode ist beispielsweise in dem Dokument EP 0 672 994 A1 offenbart.

Gemäß einer vorteilhaften Ausgestaltung der Erfindung sind die Markierungen auf einer der Lenkachse abgewandten Fläche des Markierungsträgers aufgebracht. Diese Anordnung gestattet eine Anordnung der Kamera an einer von der Lenkachse entfernten Position. Ein zentraler Bereich um die Lenkachse ist vorteilhaft zur Übertragung von Energie und Daten mittels eines Drehübertragers nutzbar, wenn die Kamera außerhalb dieses zentralen Bereichs angeordnet ist.

Vorteilhaft ist der Markierungsträger zumindest teilweise zwischen der Lenkachse und der Kamera angeordnet. Dadurch befindet sich die Kamera außerhalb des zentralen Bereichs um die Lenkachse, wodurch dieser zentrale Bereich zur Übertragung von Energie und Daten mittels eines Drehübertragers nutzbar ist.

Vorzugsweise ist der Markierungsträger zumindest annähernd rotationssymmetrisch zu der Lenkachse ausgestaltet. Vorzugsweise umgibt der Markierungsträger den Antriebsrahmen zumindest annähernd konzentrisch. Dadurch ist eine exakte Erfassung des Schwenkwinkels über einen vollständigen Schwenkbereich von 360° ermöglicht.

Bevorzugt verläuft die Lenkachse dabei in eine Vertikalrichtung, welche sich rechtwinklig zu der Querrichtung erstreckt. Die Vertikalrichtung verläuft insbesondere rechtwinklig zu einem Boden, auf dem das mobile Transportsystem steht.

Gemäß einer vorteilhaften Weiterbildung der Erfindung weist die Antriebseinheit einen Stellmotor zum Antrieb des Antriebsrahmens relativ zu dem Drehkranz um die Lenkachse auf. Vorzugsweise ist dabei ein Getriebe vorgesehen, über welches der Stellmotor den Antriebsrahmen um die Lenkachse antreibt. Durch entsprechende Ansteuerung des Stellmotors ist eine Regelung der Schwenkposition der Antriebseinheit sowie der Ausrichtung der Antriebsräder relativ zu dem Fahrzeugrahmen ermöglicht.

Gemäß einer vorteilhaften Ausgestaltung der Erfindung ist das erste Antriebsrad an einer um eine erste Schwingachse relativ zu dem Antriebsrahmen schwenkbaren ersten Schwinge drehbar gelagert, und das zweite Antriebsrad ist an einer um eine zweite Schwingachse relativ zu dem Antriebsrahmen schwenkbaren zweiten Schwinge drehbar gelagert. Durch die erfindungsgemäße Ausgestaltung des mobilen Transportsystems sind Bodenunebenheiten ausgleichbar. Durch die Schwenkbewegung der Schwingen um die Schwingachsen beim Überfahren von Bodenunebenheiten ist sichergestellt, dass beide Antriebsräder stets Kontakt zu dem Boden und einen ausreichend hohen Anpressdruck haben. Ein Einsatz von Federn, um einen ausreichend hohen Anpressdruck der Antriebsräder auf den Boden zu erreichen, ist nicht erforderlich. Das mobile Transportsystem weist dabei eine starre Kinematik auf, welche ein Nachgeben oder Einfedern beim Überfahren von Bodenunebenheiten vorteilhaft verhindert.

Gemäß einer vorteilhaften Weiterbildung der Erfindung weist die Antriebseinheit einen ersten Antriebsmotor zum Antrieb des ersten Antriebsrads und einen zweiten Antriebsmotor zum Antrieb des zweiten Antriebsrads auf, wobei der erste Antriebsmotor an der ersten Schwinge angeordnet ist, und der zweite Antriebsmotor an der zweiten Schwinge angeordnet ist. Vorzugsweise sind ferner Getriebe vorgesehen, über welche die Antriebsmotoren die Antriebsräder antreiben. Die Getriebe sind dabei ebenfalls an den Schwingen angeordnet. Die Antriebsmotoren sowie die Getriebe sind dadurch platzsparend in einem Bauraum zwischen den Antriebsrädern angeordnet.

Gemäß einer bevorzugten Ausgestaltung der Erfindung verläuft die erste Schwingachse in die Querrichtung, und die zweite Schwingachse verläuft in die Querrichtung. Vorzugsweise fluchten die erste Schwingachse und die zweite Schwingachse dabei miteinander. Die Schwingachsen verlaufen somit parallel zueinander und parallel zu den Antriebsachsen. Eine Schwenkbewegung der Schwingen um die Schwingachsen bewirkt somit eine Verschiebung der Antriebsachsen auf den Boden zu oder von dem Boden weg.

Gemäß einer vorteilhaften Ausgestaltung der Erfindung umfasst das mobile Transportsystem einen Fahrzeugrahmen und einen Pendelrahmen, welcher um eine Pendelachse relativ zu dem Fahrzeugrahmen schwenkbar ist, wobei ein Paar erste Stützräder an dem Fahrzeugrahmen angeordnet sind, und ein Paar zweite Stützräder an dem Pendelrahmen angeordnet sind, und die Antriebseinheit an dem Pendelrahmen angeordnet ist. Die Pendelachse verläuft dabei rechtwinklig zu einer Vertikalrichtung, welche sich rechtwinklig zu der Querrichtung erstreckt.

Gemäß einer vorteilhaften Ausgestaltung der Erfindung ist der Drehkranz ortsfest an dem Pendelrahmen befestigt.

Gemäß einer vorteilhaften Weiterbildung der Erfindung umfasst die Antriebseinheit einen Drehübertrager, mittels welchem elektrische Energie und Daten von dem Antriebsrahmen zu dem Pendelrahmen, sowie von dem Pendelrahmen zu dem Antriebsrahmen übertragbar sind. Der Drehübertrager weist dazu beispielsweise mindestens einen Schleifring auf.

Vorteilhaft sind die ersten Stützräder jeweils um eine in eine horizontale Richtung verlaufende erste Drehachse relativ zu dem Fahrzeugrahmen drehbar gelagert und um eine in eine Vertikalrichtung verlaufende erste Schwenkachse relativ zu dem Fahrzeugrahmen schwenkbar. Vorteilhaft sind ebenso die zweiten Stützräder jeweils um eine in eine horizontale Richtung verlaufende zweite Drehachse relativ zu dem Pendelrahmen drehbar gelagert und um eine in eine Vertikalrichtung verlaufende zweite Schwenkachse relativ zu dem Pendelrahmen schwenkbar. Die Vertikalrichtung erstreckt sich dabei rechtwinklig zu der Querrichtung. Horizontale Richtungen erstrecken sich rechtwinklig zu der Vertikalrichtung. Derartig ausgebildete Stützräder sind verhältnismäßig kostengünstig und erleichtern zudem Kurvenfahrten des mobilen Transportsystems.

Gemäß einer vorteilhaften Ausgestaltung der Erfindung ist an den zweiten Stützrädern jeweils eine Bremseinrichtung angeordnet, mittels welcher eine Drehung des jeweiligen zweiten Stützrades um eine in horizontale Richtung verlaufende zweite Drehachse bremsbar ist. Die Bremseinrichtungen sind beispielsweise elektromagnetisch betätigbar. Die zweiten Stützräder mit den Bremseinrichtungen haben auch ständig Kontakt zu dem Boden. Damit ist eine Bremsung des mobilen Transportsystems annähernd unabhängig von der Beschaffenheit des Bodens jederzeit möglich. Zusätzliche Bremseinrichtungen an den ersten Stützrädern und/oder an den Antriebsrädern sind nicht erforderlich.

Die Erfindung wird nun anhand von Abbildungen näher erläutert. Die Erfindung ist nicht auf die in den Abbildungen dargestellten Ausführungsbeispiele beschränkt. Die Abbildungen stellen den Gegenstand der Erfindung nur schematisch dar. Es zeigen:
Figur 1: eine schematische Seitenansicht eines mobilen Transportsystems,
Figur 2: eine Seitenansicht einer Antriebseinheit und
Figur 3: eine perspektivische Ansicht einer Antriebseinheit.

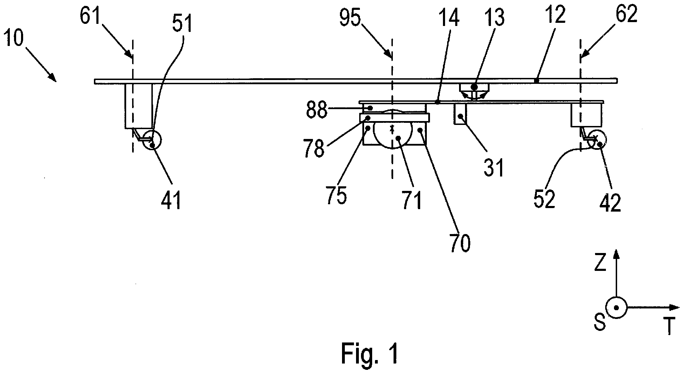

Figur 1 zeigt eine schematische Seitenansicht eines mobilen Transportsystems 10. Das mobile Transportsystem 10 dient vorliegend zum Transport von Gegenständen in einer technischen Anlage. Bei der technischen Anlage handelt es sich um eine industrielle Anwendung, beispielsweise ein Produktionswerk. Das Transportsystem 10 dient beispielsweise auch zur Lieferung von Waren zu einem Wohnhaus eines privaten Empfängers in einer Stadt oder in einem Wohngebiet. Bei dem mobilen Transportsystem 10 handelt es sich vorliegend um ein autonom fahrendes Fahrzeug. In der hier gezeigten Darstellung befindet sich das mobile Transportsystem 10 auf einem ebenen Boden innerhalb einer technischen Anlage.

Das mobile Transportsystem 10 umfasst einen Fahrzeugrahmen 12 und einen Pendelrahmen 14. Der Pendelrahmen 14 ist um eine Pendelachse 13 relativ zu dem Fahrzeugrahmen 12 schwenkbar. Die Pendelachse 13 verläuft in Seitenrichtung S. Der Fahrzeugrahmen 12 weist einen annähernd rechteckförmigen Querschnitt auf und erstreckt sich vorwiegend in eine Grundrichtung T und in die Querrichtung S.

Die Grundrichtung T entspricht zumindest annähernd der gewöhnlichen Fahrtrichtung des mobilen Transportsystems 10. Die Seitenrichtung S verläuft rechtwinklig zu der Grundrichtung T. Die Grundrichtung T und die Seitenrichtung S stellen horizontale Richtungen dar und verlaufen parallel zu dem ebenen Boden, auf welchem sich das mobile Transportsystem 10 befindet. Eine Vertikalrichtung Z steht senkrecht auf dem ebenen Boden und verläuft somit rechtwinklig zu der Grundrichtung T und rechtwinklig zu der Seitenrichtung S. Jede Richtung rechtwinklig zu der Vertikalrichtung Z stellt eine horizontale Richtung dar.

An dem Fahrzeugrahmen 12 sind zwei erste Stützräder 41 angeordnet, welche relativ zu dem Fahrzeugrahmen 12 drehbar sind. Die ersten Stützräder 41 sind in Seitenrichtung S versetzt zueinander angeordnet. An dem Pendelrahmen 14 sind zwei zweite Stützräder 42 angeordnet, welche relativ zu dem Pendelrahmen 14 drehbar sind. Die zweiten Stützräder 42 sind in Seitenrichtung S versetzt zueinander angeordnet.

Die ersten Stützräder 41 sind jeweils um eine in Vertikalrichtung Z verlaufende erste Schwenkachse 61 relativ zu dem Fahrzeugrahmen 12 schwenkbar. Die ersten Stützräder 41 sind ferner jeweils um eine in eine horizontale Richtung verlaufende erste Drehachse 51 relativ zu dem Fahrzeugrahmen 12 drehbar gelagert. In der hier gezeigten Darstellung verlaufen die ersten Drehachsen 51 in Seitenrichtung S. In Abhängigkeit von einer Schwenkung der ersten Stützräder 41 um die erste Schwenkachse 61 verlaufen die ersten Drehachsen 51 beispielsweise in Grundrichtung T oder in eine andere horizontale Richtung. Die erste Schwenkachse 61 und die erste Drehachse 51 eines ersten Stützrades 41 schneiden sich vorliegend nicht.

Die zweiten Stützräder 42 sind jeweils um eine in Vertikalrichtung Z verlaufende zweite Schwenkachse 62 relativ zu dem Pendelrahmen 14 schwenkbar. Die zweiten Stützräder 42 sind ferner jeweils um eine in eine horizontale Richtung verlaufende zweite Drehachse 52 relativ zu dem Pendelrahmen 14 drehbar gelagert. In der hier gezeigten Darstellung verlaufen die zweiten Drehachsen 52 in Seitenrichtung S. In Abhängigkeit von einer Schwenkung der zweiten Stützräder 42 um die zweiten Schwenkachse 62 verlaufen die zweiten Drehachsen 52 beispielsweise in Grundrichtung T oder in eine andere horizontale Richtung. Die zweite Schwenkachse 62 und die zweite Drehachse 52 eines zweiten Stützrades 42 schneiden sich vorliegend nicht.

Das mobile Transportsystem 10 umfasst eine Antriebseinheit 70, die an dem Pendelrahmen 14 angeordnet ist. Die Antriebseinheit 70 weist einen Antriebsrahmen 75 und einen Drehkranz 88 auf. Der Antriebsrahmen 75 ist um eine Lenkachse 95 relativ zu dem Drehkranz 88 schwenkbar. Der Drehkranz 88 ist an dem Pendelrahmen 14 befestigt. Der Antriebsrahmen 75 ist somit um die Lenkachse 95 relativ zu dem Pendelrahmen 14 schwenkbar. Die Antriebseinheit 70 ist in der Grundrichtung T zwischen den ersten Stützrädern 41 und den zweiten Stützrädern 42 angeordnet.

Die Antriebseinheit 70 weist ferner einen Markierungsträger 78 auf, welcher ortsfest an dem Antriebsrahmen 75 angeordnet ist. Auf dem Markierungsträger 78 sind hier nicht dargestellte optisch erfassbare Markierungen aufgebracht. Die auf dem Markierungsträger 78 aufgebrachten Markierungen enthalten Informationen, aus welchen ein Schwenkwinkel des Antriebsrahmens 75 relativ zu dem Drehkranz 88 um die Lenkachse 95 ermittelbar ist. Die Antriebseinheit 70 weist auch eine Kamera 31 zur Erfassung der Markierungen auf. Die Kamera 31 ist ortsfest zu dem Drehkranz 88 angeordnet und vorliegend an dem Pendelrahmen 14 befestigt.

Die Antriebseinheit 70 umfasst ein erstes Antriebsrad 71 und ein zweites Antriebsrad 72, welche drehbar gelagert sind. In der hier gezeigten Darstellung ist das zweite Antriebsrad 72 verdeckt. Die Antriebsräder 71, 72 sind in der Grundrichtung T zwischen den ersten Stützrädern 41 und den zweiten Stützrädern 42 angeordnet. Ein Abstand der zweiten Stützräder 42 in der Grundrichtung T zu der Pendelachse 13 ist zumindest annähernd gleich einem Abstand der Lenkachse 95 in der Grundrichtung T zu der Pendelachse 13. Der Abstand der zweiten Stützräder 42 zu der Pendelachse 13 in Grundrichtung T entspricht dabei dem Abstand der zweiten Schwenkachsen 62 zu der Pendelachse 13 in Grundrichtung T.

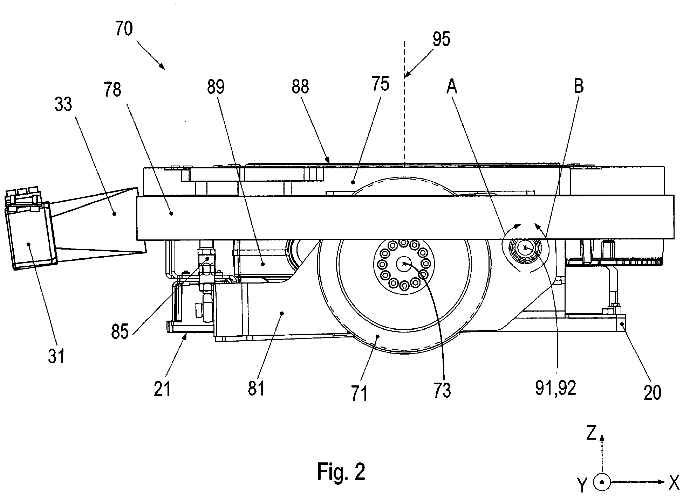

Figur 2 zeigt eine Seitenansicht der Antriebseinheit 70. Der Markierungsträger 78 ist teilweise zwischen der Lenkachse 95 und der Kamera 31 angeordnet. Die Kamera 31 ist beabstandet von dem Markierungsträger 78 angeordnet. Die Markierungen sind auf einer der Lenkachse 95 abgewandten Fläche des Markierungsträgers 78 aufgebracht. Die besagte Fläche ist der Kamera 31 zugewandt. Ein Teil des Markierungsträgers 78 befindet sich in einem Erfassungskegel 33 der Kamera 31. Mittels der Kamera 31 sind Markierungen auf dem Markierungsträger 78 erfassbar, welche sich in dem Erfassungskegel 33 befinden.

Die Antriebseinheit 70 umfasst eine erste Schwinge 81, die um eine erste Schwingachse 91 relativ zu dem Antriebsrahmen 75 schwenkbar ist, und eine hier verdeckte zweite Schwinge 82, die um eine zweite Schwingachse 92 relativ zu dem Antriebsrahmen 75 schwenkbar ist. Die erste Schwingachse 91 und die zweite Schwingachse 92 verlaufen in eine Querrichtung Y und fluchten miteinander. Die Schwingen 81, 82 sind jeweils in eine erste Schwenkrichtung A sowie in eine der ersten Schwenkrichtung A entgegen gerichtete zweite Schwenkrichtung B um die Schwingachsen 91, 92 relativ zu dem Antriebsrahmen 75 schwenkbar.

Die Querrichtung Y verläuft rechtwinklig zu der Vertikalrichtung Z. Eine Längsrichtung X verläuft rechtwinklig zu der Vertikalrichtung Z und rechtwinklig zu der Querrichtung Y. Die Längsrichtung X und die Querrichtung Y stellen horizontale Richtungen dar. Jede Richtung rechtwinklig zu der Vertikalrichtung Z stellt eine horizontale Richtung dar. Der Antriebsrahmen 75 der Antriebseinheit 70 ist, wie bereits erwähnt, um die Lenkachse 95 relativ zu dem Drehkranz 88 und zu dem Pendelrahmen 14 des mobilen Transportsystems 10 schwenkbar. In Abhängigkeit von einer Schwenkbewegung des Antriebsrahmens 75 um die Lenkachse 95 ändert sich eine Ausrichtung des Antriebsrahmens 75 relativ zu dem Fahrzeugrahmen 12 und relativ zu dem Pendelrahmen 14. In der in Figur 1 gezeigten Darstellung entspricht die Längsrichtung X der Grundrichtung T, und die Querrichtung Y entspricht der Seitenrichtung S.

Das erste Antriebsrad 71 ist an der ersten Schwinge 81 um eine in die Querrichtung Y verlaufende erste Antriebsachse 73 drehbar gelagert. Das zweite Antriebsrad 72 ist an der zweiten Schwinge 82 um eine in die Querrichtung Y verlaufende zweite Antriebsachse 74 drehbar gelagert. In der hier gezeigten Darstellung ist das zweite Antriebsrad 72 verdeckt. Die Antriebsachsen 73, 74 verlaufen also parallel zu den Schwingachsen 91, 92, sind jedoch parallel zu diesen versetzt. Durch Schwenkbewegungen der Schwingen 81, 82 um die Schwingachsen 91, 92 sind die Antriebsachsen 73, 74 rechtwinklig zu der Querrichtung Y relativ zueinander verschiebbar. Die Antriebsachsen 73, 74 schneiden, zumindest annähernd, die Lenkachse 95.

Die Antriebseinheit 70 weist eine Empfangseinheit 20 auf, welche an dem Antriebsrahmen 75 angeordnet ist, und zu welcher Energie induktiv von einer Ladeeinheit übertragbar ist. Die Ladeeinheit ist beispielsweise als linienförmiger Leiter oder als Spule ausgebildet. Die von der Ladeeinheit zu der Empfangseinheit 20 induktiv übertragene Energie dient beispielsweise zum Laden eines elektrischen Energiespeichers des mobilen Transportsystems 10.

Die Antriebseinheit 70 weist ferner einen induktiven Sensor 21 auf, welche an dem Antriebsrahmen 75 angeordnet ist. Der induktive Sensoren 21 dient zur Detektion eines Magnetfeldes. Wenn das Magnetfeld beispielsweise von einem in dem Boden verlegten linienförmigen Leiter erzeugt wird, so gestattet der induktive Sensor 21, dem besagten linienförmigen Leiter zu folgen um zu einem bestimmten Ziel zu gelangen.

Die Antriebseinheit 70 weist auch einen hier nicht dargestellten Drehübertrager 94 auf. Der Drehübertrager 94 weist beispielsweise Schleifringe auf, mittels welchen elektrische Energie und Daten von dem Antriebsrahmen 75 zu dem Drehkranz 88 und zu dem Pendelrahmen 14 übertragbar sind. Mittels der Schleifringe sind elektrische Energie und Daten auch von dem Drehkranz 88 und von dem Pendelrahmen 14 zu dem Antriebsrahmen 75 übertragbar.

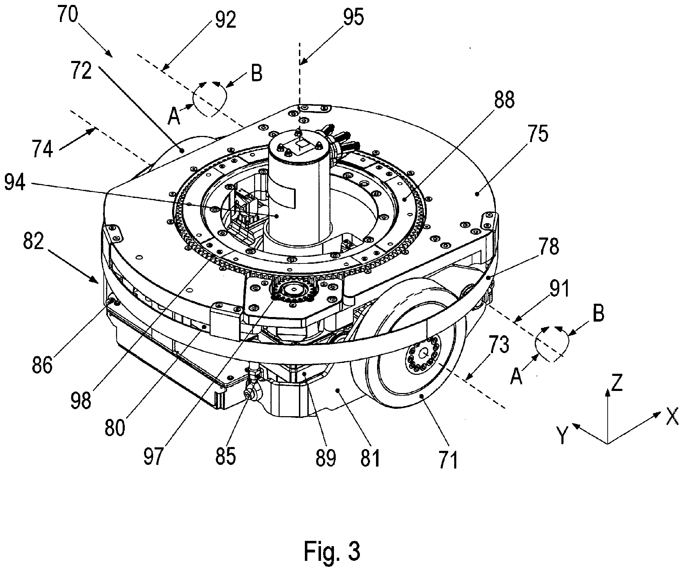

Figur 3 zeigt eine perspektivische Ansicht der Antriebseinheit 70. Der Markierungsträger 78 ist zumindest annähernd rotationssymmetrisch zu der Lenkachse 95 ausgestaltet und umgibt den Antriebsrahmen 75 zumindest annähernd konzentrisch. Die Markierungen sind, wie bereits erwähnt, auf einer der Lenkachse 95 abgewandten Fläche des Markierungsträgers 78 aufgebracht. Die Kamera 31 ist in dieser Darstellung nicht gezeigt.

Die Antriebseinheit 70 weist einen Stellmotor 89 zum Antrieb des Antriebsrahmens 75 relativ zu dem Drehkranz 88 um die Lenkachse 95 auf. Der Stellmotor 89 ist vorliegend an dem Antriebsrahmen 75 ortsfest angeordnet und mit einem Getriebe wirkverbunden, über welches der Stellmotor 89 den Antriebsrahmen 75 relativ zu dem Drehkranz 88 antreibt. Das besagte Getriebe umfasst ein Ritzel 97, welches an dem Antriebsrahmen 75 ortsfest angeordnet ist, und einen Zahnkranz 98. Der Zahnkranz 98 ist ortsfest an dem Drehkranz 88 angeordnet. Das Ritzel 97 kämmt mit dem Zahnkranz 98. Der Stellmotor 89 treibt das Ritzel 97 an, welches mit dem Zahnkranz 98 kämmt.

Der Drehübertrager 94 weist einen annähernd rotationssymmetrischen, insbesondere kreiszylindrischen, Grundkörper auf. Eine Zylinderachse des Grundkörpers des Drehübertragers 94 verläuft in Vertikalrichtung Z und fluchtet mit der Lenkachse 95. Der Drehübertrager 94 ist ortsfest an dem Antriebsrahmen 75 angeordnet und relativ zu dem Drehkranz 88 um die Lenkachse 95 schwenkbar. Es ist auch denkbar, dass der Drehübertrager 94 ortsfest an dem Drehkranz 88 angeordnet und relativ zu dem Antriebsrahmen 75 um die Lenkachse 95 schwenkbar ist.

Die Antriebseinheit 70 umfasst eine Koppeleinheit, die eine um eine Koppelachse relativ zu dem Antriebsrahmen 75 schwenkbare Wippe 80, eine erste Strebe 85 und eine zweite Strebe 86 aufweist. Die erste Schwinge 81 ist mittels der ersten Strebe 85 mit der Wippe 80 verbunden. Die zweite Schwinge 82 ist mittels der zweiten Strebe 86 mit der Wippe 80 verbunden. Die hier nicht sichtbare Koppelachse verläuft in die Längsrichtung X. Die erste Schwinge 81 und die zweite Schwinge 82 sind also über die besagte Koppeleinheit miteinander gekoppelt.

Wenn beispielsweise das erste Antriebsrad 71 auf eine Bodenerhöhung fährt, so wird das erste Antriebsrad 71 dadurch in Vertikalrichtung Z nach oben bewegt. Die erste Schwinge 81 wird dadurch um die erste Schwingachse 91 in die erste Schwenkrichtung A geschwenkt. Die erste Schwinge 81 bewirkt dadurch über die erste Strebe 85 eine Schwenkbewegung der Wippe 80 um die Koppelachse. Die Wippe 80 bewirkt dadurch über die zweite Strebe 86 eine Schwenkbewegung der zweiten Schwinge 82 um die zweite Schwingachse 92 in die zweite Schwenkrichtung B. Dadurch wird das zweite Antriebsrad 72 in Vertikalrichtung Z nach unten bewegt.

Bei dem beschriebenen Vorgang bewegen sich die Antriebsräder 71, 72 nicht ausschließlich in Vertikalrichtung Z, sondern auch geringfügig in Längsrichtung X. Aufgrund der geometrischen Anordnung der Schwingen 81, 82 und der Schwingachsen 91, 92 ist die Bewegung der Antriebsräder 71, 72 in Längsrichtung X gegenüber der Bewegung in Vertikalrichtung Z jedoch vernachlässigbar.

Die erste Schwinge 81 und die zweite Schwinge 82 sind somit über die Koppeleinheit derart miteinander gekoppelt, dass eine Schwenkbewegung der ersten Schwinge 81 um die erste Schwingachse 91 in die erste Schwenkrichtung A eine Schwenkbewegung der zweiten Schwinge 82 um die zweite Schwingachse 92 in die zweite Schwenkrichtung B bewirkt. Die erste Schwinge 81 und die zweite Schwinge 82 sind über die Koppeleinheit ebenfalls derart miteinander gekoppelt, dass eine Bewegung des ersten Antriebsrads 71 in Vertikalrichtung Z nach oben eine Bewegung des zweiten Antriebsrads 72 in Vertikalrichtung Z nach unten bewirkt, und umgekehrt.

Die erste Strebe 85 und die zweite Strebe 86 erstrecken sich zumindest annähernd in die Vertikalrichtung Z. Die erste Strebe 85 und die zweite Strebe 86 sind jeweils unabhängig voneinander längeneinstellbar. Das bedeutet, eine Ausdehnung der Streben 85, 86 in die Vertikalrichtung Z ist einstellbar.

Die Antriebseinheit 70 weist einen hier nicht dargestellten Neigungssensor auf, welcher eine Neigung der Wippe 80 um die Koppelachse relativ zu dem Antriebsrahmen 75 erfasst. Die Antriebseinheit 70 weist einen hier nicht dargestellten Neigungssensor auf, welcher eine Neigung der ersten Schwinge 81 um die erste Schwingachse 91 relativ zu dem Antriebsrahmen 75 erfasst. Die Antriebseinheit 70 weist einen hier nicht dargestellten Neigungssensor auf, welcher eine Neigung der zweiten Schwinge 82 um die zweite Schwingachse 92 relativ zu dem Antriebsrahmen 75 erfasst.

### Bezugszeichenliste

- 10: Mobiles Transportsystem
- 12: Fahrzeugrahmen
- 13: Pendelachse
- 14: Pendelrahmen
- 20: Empfangseinheit
- 21: erster induktiver Sensor
- 31: Kamera
- 33: Erfassungskegel
- 41: erstes Stützrad
- 42: zweites Stützrad
- 51: erste Drehachse
- 52: zweite Drehachse
- 61: erste Schwenkachse
- 62: zweite Schwenkachse
- 70: Antriebseinheit
- 71: erstes Antriebsrad
- 72: zweites Antriebsrad
- 73: erste Antriebsachse
- 74: zweite Antriebsachse
- 75: Antriebsrahmen
- 78: Markierungsträger
- 80: Wippe
- 81: erste Schwinge
- 82: zweite Schwinge
- 85: erste Strebe
- 86: zweite Strebe
- 88: Drehkranz
- 89: Stellmotor
- 91: erste Schwingachse
- 92: zweite Schwingachse
- 94: Drehübertrager
- 95: Lenkachse
- 97: Ritzel
- 98: Zahnkranz
- A: erste Schwenkrichtung
- B: zweite Schwenkrichtung
- S: Seitenrichtung
- T: Grundrichtung
- X: Längsrichtung
- Y: Querrichtung
- Z: Vertikalrichtung

## Patentansprüche

1. Mobiles Transportsystem (10), zum Transport von Gegenständen, insbesondere in einer technischen Anlage, umfassend
eine Antriebseinheit (70), welche
ein um eine in eine Querrichtung (Y) verlaufende erste Antriebsachse (73) drehbares erstes Antriebsrad (71) und
ein um eine in die Querrichtung (Y) verlaufende zweite Antriebsachse (74) drehbares zweites Antriebsrad (72) aufweist
**dadurch gekennzeichnet, dass**
die Antriebseinheit (70) einen Drehkranz (88) und einen Antriebsrahmen (75) aufweist, wobei der Antriebsrahmen (75) um eine Lenkachse (95) relativ zu dem Drehkranz (88) schwenkbar ist, und dass
die Antriebseinheit (70) einen Markierungsträger (78) aufweist, welcher ortsfest zu dem Antriebsrahmen (75) angeordnet ist, und auf welchem optisch erfassbare Markierungen aufgebracht sind, und dass
die Antriebseinheit (70) eine Kamera (31) zur Erfassung der Markierungen aufweist, welche ortsfest zu dem Drehkranz (88) angeordnet ist.

2. Mobiles Transportsystem (10) nach Anspruch 1, **dadurch gekennzeichnet, dass**
die auf dem Markierungsträger (78) aufgebrachten Markierungen Informationen enthalten, aus welchen ein Schwenkwinkel des Antriebsrahmens (75) relativ zu dem Drehkranz (88) um die Lenkachse (95) ermittelbar ist.

3. Mobiles Transportsystem (10) nach einem der vorangegangenen Ansprüche, **dadurch gekennzeichnet, dass**
die auf dem Markierungsträger (78) aufgebrachten Markierungen als Barcode, insbesondere als zweidimensionaler Barcode, insbesondere als QR-Code, ausgestaltet sind.

4. Mobiles Transportsystem (10) nach einem der vorangegangenen Ansprüche, **dadurch gekennzeichnet, dass**
die Markierungen auf einer der Lenkachse (95) abgewandten Fläche des Markierungsträgers (78) aufgebracht sind.

5. Mobiles Transportsystem (10) nach einem der vorangegangenen Ansprüche, **dadurch gekennzeichnet, dass**
der Markierungsträger (78) zumindest teilweise zwischen der Lenkachse (95) und der Kamera (31) angeordnet ist.

6. Mobiles Transportsystem (10) nach einem der vorangegangenen Ansprüche, **dadurch gekennzeichnet, dass**
der Markierungsträger (78) zumindest annähernd rotationssymmetrisch zu der Lenkachse (95) ausgestaltet ist, und/oder dass
der Markierungsträger (78) den Antriebsrahmen (75) zumindest annähernd konzentrisch umgibt.

7. Mobiles Transportsystem (10) nach einem der vorangegangenen Ansprüche, **dadurch gekennzeichnet, dass**
die Lenkachse (95) in eine Vertikalrichtung (Z) verläuft, welche
sich rechtwinklig zu der Querrichtung (Y) erstreckt.

8. Mobiles Transportsystem (10) nach einem der vorangegangenen Ansprüche,
**dadurch gekennzeichnet, dass**
die Antriebseinheit (70) einen Stellmotor (89) zum Antrieb des Antriebsrahmens (75) relativ zu dem Drehkranz (88) um die Lenkachse (95) aufweist.

9. Mobiles Transportsystem (10) nach einem der vorangegangenen Ansprüche,
**dadurch gekennzeichnet, dass**
das erste Antriebsrad (71) an einer um eine erste Schwingachse (91) relativ zu dem Antriebsrahmen (75) schwenkbaren ersten Schwinge (81) drehbar gelagert ist, und dass das zweite Antriebsrad (72) an einer um eine zweite Schwingachse (92) relativ zu dem Antriebsrahmen (75) schwenkbaren zweiten Schwinge (82) drehbar gelagert ist.

10. Mobiles Transportsystem (10) nach Anspruch 9, **dadurch gekennzeichnet, dass**
die Antriebseinheit (70) einen ersten Antriebsmotor zum Antrieb des ersten Antriebsrads (71) und einen zweiten Antriebsmotor zum Antrieb des zweiten Antriebsrads (72) aufweist, wobei der erste Antriebsmotor an der ersten Schwinge (81) angeordnet ist, und
der zweite Antriebsmotor an der zweiten Schwinge (82) angeordnet ist.

11. Mobiles Transportsystem (10) nach einem der Ansprüche 9 bis 10,
**dadurch gekennzeichnet, dass**
die erste Schwingachse (91) in die Querrichtung (Y) verläuft, und dass
die zweite Schwingachse (92) in die Querrichtung (Y) verläuft, und/oder dass
die erste Schwingachse (91) und die zweite Schwingachse (92) miteinander fluchten.

12. Mobiles Transportsystem (10) nach einem der vorangegangenen Ansprüche, **dadurch gekennzeichnet, dass**
das mobile Transportsystem (10) einen Fahrzeugrahmen (12) und einen Pendelrahmen (14), welcher um eine Pendelachse (13) relativ zu dem Fahrzeugrahmen (12) schwenkbar ist, umfasst, wobei
ein Paar erste Stützräder (41) an dem Fahrzeugrahmen (12) angeordnet sind, und
ein Paar zweite Stützräder (42) an dem Pendelrahmen (14) angeordnet sind, und
die Antriebseinheit (70) an dem Pendelrahmen (14) angeordnet ist, und wobei
die Pendelachse (13) rechtwinklig zu einer Vertikalrichtung (Z) verläuft, welche sich rechtwinklig zu der Querrichtung (Y) erstreckt.

13. Mobiles Transportsystem (10) Anspruch 12, **dadurch gekennzeichnet, dass**
der Drehkranz (88) ortsfest an dem Pendelrahmen (14) befestigt ist.

14. Mobiles Transportsystem (10) nach einem der Ansprüche 12 bis 13,
**dadurch gekennzeichnet, dass**
die Antriebseinheit (70) einen Drehübertrager (94) umfasst, mittels welchem elektrische Energie und Daten von dem Antriebsrahmen (75) zu dem Pendelrahmen (14), sowie von dem Pendelrahmen (14) zu dem Antriebsrahmen (75) übertragbar sind.

15. Mobiles Transportsystem (10) nach einem der Ansprüche 12 bis 14, **dadurch gekennzeichnet, dass**
die ersten Stützräder (41) jeweils um eine in eine horizontale Richtung verlaufende erste Drehachse (51) relativ zu dem Fahrzeugrahmen (12) drehbar gelagert und
um eine in eine Vertikalrichtung (Z) verlaufende erste Schwenkachse (61) relativ zu dem Fahrzeugrahmen (12) schwenkbar sind, und/oder dass
die zweiten Stützräder (42) jeweils um eine in eine horizontale Richtung verlaufende zweite Drehachse (52) relativ zu dem Pendelrahmen (14) drehbar gelagert und
um eine in eine Vertikalrichtung (Z) verlaufende zweite Schwenkachse (62) relativ zu dem Pendelrahmen (14) schwenkbar sind, wobei
die Vertikalrichtung (Z) sich rechtwinklig zu der Querrichtung (Y) erstreckt.

## Claims

1. A mobile transport system (10), for the transportation of obj ects, in particular in a technical system, comprising
a drive unit (70) which has a first drive wheel (71) rotatable about a first drive axis (73) running in a transverse direction (Y) and a second drive wheel (72) rotatable about a second drive axis (74) running in the transverse direction (Y)
**characterised in that**
the drive unit (70) has a slewing ring (88) and a drive frame (75), wherein the drive frame (75) is pivotable relative to the slewing ring (88) about a steering axis (95),
and **in that**
the drive unit (70) has a markings carrier (78) which is arranged in a fixed manner with respect to the drive frame (75) and to which optically detectable markings are applied,
and **in that**
the drive unit (70) has a camera (31) for detecting the markings, which camera is arranged in a fixed manner with respect to the slewing ring (88).

2. A mobile transport system (10) according to claim 1, **characterised in that**
the markings applied to the markings carrier (78) contain information from which a pivot angle of the drive frame (75) relative to the slewing ring (88) about the steering axis (95) can be determined.

3. A mobile transport system (10) according to any one of the preceding claims,
**characterised in that**
the markings applied to the markings carrier (78) are in the form of a barcode, in particular a two-dimensional barcode, in particular a QR code.

4. A mobile transport system (10) according to any one of the preceding claims,
**characterised in that**
the markings are applied to a surface, facing away from the steering axis (95), of the markings carrier (78).

5. A mobile transport system (10) according to any one of the preceding claims,
**characterised in that**
the markings carrier (78) is arranged at least partially between the steering axis (95) and the camera (31).

6. A mobile transport system (10) according to any one of the preceding claims,
**characterised in that**
the markings carrier (78) is at least approximately rotationally-symmetrical with respect to the steering axis (95), and/or **in that**
the markings carrier (78) surrounds the drive frame (75) at least approximately concentrically.

7. A mobile transport system (10) according to any one of the preceding claims,
**characterised in that**
the steering axis (95) runs in a vertical direction (Z) which extends at right angles to the transverse direction (Y).

8. A mobile transport system (10) according to any one of the preceding claims,
**characterised in that**
the drive unit (70) has an actuator (89) to drive the drive frame (75) relative to the slewing ring (88) about the steering axis (95).

9. A mobile transport system (10) according to any one of the preceding claims,
**characterised in that**
the first drive wheel (71) is rotatably mounted on a first swing arm (81) pivotable relative to the drive frame (75) about a first swing axis (91), and **in that** the second drive wheel (72) is rotatably mounted on a second swing arm (82) pivotable relative to the drive frame (75) about a second swing axis (92).

10. A mobile transport system (10) according to claim 9, **characterised in that**
the drive unit (70) has a first drive motor to drive the first drive wheel (71) and a second drive motor to drive the second drive wheel (72), wherein the first drive motor is arranged on the first swing arm (81) and the second drive motor is arranged on the second swing arm (82).

11. A mobile transport system (10) according to one of claims 9 to 10,
**characterised in that**
the first swing axis (91) runs in the transverse direction (Y), and **in that** the second swing axis (92) runs in the transverse direction (Y), and/or **in that** the first swing axis (91) and the second swing axis (92) are aligned with one another.

12. A mobile transport system (10) according to any one of the preceding claims,
**characterised in that**
the mobile transport system (10) comprises a vehicle frame (12) and a swing frame (14) which is pivotable relative to the vehicle frame (12) about a swing axis (13), wherein a pair of first support wheels (41) are arranged on the vehicle frame (12) and a pair of second support wheels (42) are arranged on the swing frame (14) and the drive unit (70) is arranged on the swing frame (14), and wherein the swing axis (13) runs at right angles to a vertical direction (Z) which extends at right angles to the transverse direction (Y).

13. A mobile transport system (10) claim 12, **characterised in that**
the slewing ring (88) is secured to the swing frame (14) in a fixed manner.

14. A mobile transport system (10) according to one of claims 12 to 13,
**characterised in that**
the drive unit (70) comprises a rotary transmitter (94) by means of which electrical energy and data can be transmitted from the drive frame (75) to the swing frame (14) as well as from the swing frame (14) to the drive frame (75).

15. A mobile transport system (10) according to any one of claims 12 to 14, **characterised in that**
the first support wheels (41) are each rotatably mounted relative to the vehicle frame (12) about a first rotational axis (51) running in a horizontal direction and are each pivotable relative to the vehicle frame (12) about a first pivot axis (61) running in a vertical direction (Z), and/or **in that**
the second support wheels (42) are each rotatably mounted relative to the swing frame (14) about a second rotational axis (52) running in a horizontal direction and are each pivotable relative to the swing frame (14) about a second pivot axis (62) running in a vertical direction (Z), wherein
the vertical direction (Z) extends at right angles to the transverse direction (Y).

## Revendications

1. Système mobile de transport (10) conçu pour transporter des objets, en particulier dans une installation technique, comprenant
une unité d'entraînement (70) qui comporte
une première roue d'entraînement (71), apte à tourner autour d'un premier axe d'entraînement (73) s'étendant dans une direction transversale (Y), et
une seconde roue d'entraînement (72), apte à tourner autour d'un second axe d'entraînement (74) s'étendant dans ladite direction transversale (Y),
**caractérisé par le fait que**
l'unité d'entraînement (70) est munie d'une couronne rotative (88) et d'un châssis d'entraînement (75), lequel châssis d'entraînement (75) peut pivoter par rapport à la couronne rotative (88), autour d'un axe de direction (95) ; **par le fait que**
ladite unité d'entraînement (70) est dotée d'un porte-repères (78) qui occupe un emplacement fixe par rapport au châssis d'entraînement (75), et sur lequel sont tracés des repères détectables optiquement ; et **par le fait que**
ladite unité d'entraînement (70) est équipée d'une caméra (31) affectée à la détection desdits repères et occupant un emplacement fixe par rapport à la couronne rotative (88).

2. Système mobile de transport (10) selon la revendication 1, **caractérisé par le fait que**
les repères tracés sur le porte-repères (78) contiennent des informations sur la base desquelles il est possible de déterminer un angle de pivotement du châssis d'entraînement (75), autour de l'axe de direction (95), par rapport à la couronne rotative (88).

3. Système mobile de transport (10) selon l'une des revendications précédentes, **caractérisé par le fait que**
les repères tracés sur le porte-repères (78) sont conçus sous la forme d'un code à barres, notamment d'un code à barres bidimensionnel, en particulier d'un code à réponse rapide.

4. Système mobile de transport (10) selon l'une des revendications précédentes, **caractérisé par le fait que**
les repères sont tracés sur une surface du porte-repères (78) qui pointe à l'opposé de l'axe de direction (95).

5. Système mobile de transport (10) selon l'une des revendications précédentes, **caractérisé par le fait que**
le porte-repères (78) est interposé, au moins en partie, entre l'axe de direction (95) et la caméra (31).

6. Système mobile de transport (10) selon l'une des revendications précédentes, **caractérisé par le fait que**
le porte-repères (78) est conçu, au moins approximativement, avec symétrie de rotation par rapport à l'axe de direction (95) ; et/ou **par le fait que**
ledit porte-repères (78) entoure le châssis d'entraînement (75) de manière concentrique, au moins approximativement.

7. Système mobile de transport (10) selon l'une des revendications précédentes, **caractérisé par le fait que**
l'axe de direction (95) s'étend dans une direction verticale (Z)
dont l'étendue est perpendiculaire à la direction transversale (Y).

8. Système mobile de transport (10) selon l'une des revendications précédentes, **caractérisé par le fait que**
l'unité d'entraînement (70) est équipée d'un servomoteur (89) conçu pour mener le châssis d'entraînement (75), par rapport à la couronne rotative (88), autour de l'axe de direction (95).

9. Système mobile de transport (10) selon l'une des revendications précédentes, **caractérisé par le fait que**
la première roue d'entraînement (71) est montée à rotation sur un premier bras oscillant (81) apte à pivoter, par rapport au châssis d'entraînement (75), autour d'un premier axe d'oscillation (91) ; et **par le fait que**
la seconde roue d'entraînement (72) est montée à rotation sur un second bras oscillant (82) apte à pivoter, par rapport audit châssis d'entraînement (75), autour d'un second axe d'oscillation (92).

10. Système mobile de transport (10) selon la revendication 9, **caractérisé par le fait que**
l'unité d'entraînement (70) est pourvue d'un premier moteur d'entraînement, conçu pour mener la première roue d'entraînement (71), et d'un second moteur d'entraînement conçu pour mener la seconde roue d'entraînement (72), sachant que
ledit premier moteur d'entraînement est implanté sur le premier bras oscillant (81), et que ledit second moteur d'entraînement est implanté sur le second bras oscillant (82).

11. Système mobile de transport (10) selon l'une des revendications 9 à 10, **caractérisé par le fait que**
le premier axe d'oscillation (91) s'étend dans la direction transversale (Y) ; et **par le fait que**
le second axe d'oscillation (92) s'étend dans ladite direction transversale (Y) ; et/ou **par le fait que**
ledit premier axe d'oscillation (91) et ledit second axe d'oscillation (92) sont mutuellement alignés.

12. Système mobile de transport (10) selon l'une des revendications précédentes, **caractérisé par le fait que**
ledit système mobile de transport (10) inclut un châssis (12) de véhicule et un châssis oscillant (14) apte à pivoter par rapport audit châssis (12) de véhicule, autour d'un axe (13) d'oscillation pendulaire, sachant
qu'une paire de premières roues d'appui (41) est implantée sur ledit châssis (12) de véhicule,
qu'une paire de secondes roues d'appui (42) est implantée sur ledit châssis oscillant (14), et
que l'unité d'entraînement (70) est implantée sur ledit châssis oscillant (14), et sachant que
l'axe (13) d'oscillation pendulaire s'étend perpendiculairement à une direction verticale (Z)
dont l'étendue est perpendiculaire à la direction transversale (Y).

13. Système mobile de transport (10) selon la revendication 12, **caractérisé par le fait que**
la couronne rotative (88) est fixée au châssis oscillant (14) avec verrouillage à demeure.

14. Système mobile de transport (10) selon l'une des revendications 12 à 13, **caractérisé par le fait que**
l'unité d'entraînement (70) est pourvue d'un transmetteur rotatif (94) au moyen duquel de l'énergie électrique et des données peuvent être transmises au châssis oscillant (14), à partir du châssis d'entraînement (75), ainsi qu'audit châssis d'entraînement (75) à partir dudit châssis oscillant (14).

15. Système mobile de transport (10) selon l'une des revendications 12 à 14, **caractérisé par le fait que**
les premières roues d'appui (41) sont montées rotatives, par rapport au châssis (12) de véhicule, autour d'un premier axe respectif de rotation (51) s'étendant dans une direction horizontale et
sont aptes à pivoter, par rapport audit châssis (12) de véhicule, autour d'un premier axe de pivotement (61) s'étendant dans une direction verticale (Z) ; et/ou **par le fait que** les secondes roues d'appui (42) sont montées rotatives, par rapport au châssis oscillant (14), autour d'un second axe respectif de rotation (52) s'étendant dans une direction horizontale et
sont aptes à pivoter, par rapport audit châssis oscillant (14), autour d'un second axe de pivotement (62) s'étendant dans une direction verticale (Z), sachant que ladite direction verticale (Z) s'étend perpendiculairement à la direction transversale (Y).
